Europäisches Patentamt

European Patent Office

Office européen des brevets

(11) Veröffentlichungsnummer: **0 054 600**
A1

(12) **EUROPÄISCHE PATENTANMELDUNG**

(21) Anmeldenummer: **80810410.3**

(51) Int. Cl.³: **A 61 C 11/00**

(22) Anmeldetag: **22.12.80**

(43) Veröffentlichungstag der Anmeldung: **30.06.82**
**Patentblatt 82/26**

(71) Anmelder: **Balogh, Jòzsef, Diebold Schillingstrasse 24, CH-6004 Luzern (Kanton Luzern) (CH)**

(72) Erfinder: **Balogh, Jòzsef, Diebold Schillingstrasse 24, CH-6004 Luzern (Kanton Luzern) (CH)**

(74) Vertreter: **Bovard, Fritz Albert et al, Bovard & Cie Patentanwälte VSP Optingenstrasse 16, CH-3000 Bern 25 (CH)**

(84) Benannte Vertragsstaaten: **AT BE CH DE FR GB IT LI LU NL SE**

(54) **Zahnärztlicher Artikulator.**

(57) Der Artikulator weist einen Rahmen (1) und einen am Rahmen (1) abnehmbar angeordneten kastenförmigen Träger (2) auf. Senkrecht zur Ebene des Trägers (2) erstreckt sich eine Tragplatte (4), die mit dem Träger (2) mittels Zugfedern (34) gelenkig verbunden und von ihm abnehmbar ist. Die Tragplatte (4) dient zur Aufnahme von ein Abgußmodell (50) des unteren Kiefers tragenden Mitteln (5). Der Träger (2) ist am Rahmen (1) höhenverstellbar. Im Träger (2) sind Mittel (17, 20) zum Festlegen der Bewegungsbahnen der Tragplatte (4) entsprechend den Meßergebnissen der Sagittal- und Lateralbewegungen des Unterkiefers eines Patienten vorgesehen. Im Artikulator werden die Bewegungskomponenten des Unterkiefers eines Patienten festgelegt und der Funktionsablauf des Kiefergelenksystems bei der Bewegung der Tragplatte (4) genau reproduziert.

Zahnärztlicher Artikulator

Die Erfindung geht aus von einem zahnärztlichen Artikulator mit einem Rahmen, einem am Rahmen abnehmbar angeordneten Träger mit einer senkrecht zur Ebene des Trägers verlaufenden Stützplatte und einer beweglichen Tragplatte mit einem Teleskopstützfuss, welche Tragplatte am Träger abnehmbar befestigt ist und im wesentlichen senkrecht zur Ebene des Trägers verläuft, und einem am oberen Ende des Rahmens schwenkbar befestigten Tragarm zur Aufnahme von ein Abgussmodell des oberen Kiefers tragenden Mitteln.

Bei der Herstellung von Gebissen, Brücken, Prothesen usw. werden üblicherweise Abdrücke des oberen und des unteren Zahnfleisches abgenommen und von diesen Abdrücken Abgussmodelle gegossen, an welchen Kunstzahnfleisch und -zähne angefertigt werden. Es kommt aber oft vor, dass sich die Kunstgebisse nicht auf einer gemeinsamen horizontalen Ebene berühren. Dies führt zu einer unnatürlichen Schlussbissstellung der Kiefer eines Patienten.

Bei der Herstellung von Gebissen, Brücken, Prothesen usw. dieser Art sind für den Arzt der Winkel der Schlussbissstellung der beiden Kiefer eines Patienten sowie die Simulation der Bewegungen des unteren Kiefers gegenüber dem oberen Kiefer von grosser Bedeutung. Die richtige Anordnung, Abstand und Eingriff der hergestellten Prothesen usw., die den wirklichen Bedingungen am genauesten entsprechen, gewährleisten dann einen angenehmen, ungestörten Gebrauch durch den Patienten.

In der USA Patentschrift Nr. 2 716 815 wird ein Verfahren beschrieben, in welchem die Okklusionsebene zwischen den Abgussmodellen des oberen und des unteren Zahnfleisches festgelegt wird; die Abgussmodelle werden an einer in die Okklusionsebene gelegten Platte eines Artikulators angeordnet. In diesem Verfahren soll durch Verschieben der Zahnblöcke entlang der Oberfläche der Platte in bezug auf die Zahnfleischkammlinie der Abgussmodelle eine für die Kunstgebisse ausbalancierte Okklusion erreicht werden.

Aus der USA Patentschrift Nr. 2 621 406 ist weiter ein Verfahren bekannt, in welchem laterale Neigungen des Unterkiefers eines Patienten bestimmt und in einem Artikulator wieder festgelegt werden. Zu diesem Zweck ist eine Beissplatte vorgesehen, die in den Mund des Patienten eingeführt wird. An dem mit dieser Beissplatte verbundenen Arm ist eine Libelle angeordnet. Die Libelle kann in einer senkrechten Ebene schwenken, die parallel zu einer ähnlichen Ebene liegt, die seitlich durch den Kiefer des Patienten verläuft. Somit wird die laterale Neigung des Kiefers des Patienten mit Bezug auf den Gesichtskreis bestimmt. Nach dem Herausnehmen der Beissplatte aus dem Mund des Patienten werden in einem Artikulator mittels der Libelle die gleichen lateralen Neigungen registriert, die die Beissplatte im Munde des Patienten eingenommen hat.

Dieses Verfahren und der dazu dienende Artikulator ist ziemlich kompliziert, indem eine Beissplatte in den Mund des Patienten eingeführt werden muss.

Es ist die Aufgabe der Erfindung, einen zahnärztlichen Artikulator der eingangs erwähnten Gattung zu schaffen, in welchem festgelegte Bewegungskomponenten des Unterkiefers eines Patienten und der Funktionsablauf des Kiefergelenksystemes genau reproduzierbar sind. Des weiteren sollen einzelne Teile des Artikulators technisch einfach, im Artikulator leicht und schnell einsetzbar und auseinandernehmbar sein. Durch die genaue Nachahmung aller Bewegungsbahnen des Unterkiefers eines Patienten soll mit einem solchen Artikulator eine präzise Einschleifung der Prothesen von Gebissen oder einzelnen Zähnen erreicht werden.

Diese Aufgaben werden bei einem zahnärztlichen Artikulator nach dem Oberbegriff des Patentanspruches 1 durch Mittel zur Höhenverstellung des Trägers, der in Führungsnuten der Hinterwand des Rahmens führbar ist, sowie Mittel zum Festlegen der Bewegungsbahnen der Tragplatte entsprechend den Messergebnissen der Sagittal- und Lateralbewegungen des Unterkiefers eines Patienten gelöst.

Mit Vorteil bestehen die Mittel zur Höhenverstellung des in Führungsnuten des Rahmens führbaren Trägers aus einem am unteren Ende des Trägers befestigten, vertikalen Schraubenstift und einer in einem horizontalen Schlitz der Hinterwand des Rahmens untergebrachten Mutter, welche mit dem Schraubenstift in Eingriff steht.

Die Mittel zum Festlegen der Bewegungsbahnen der Tragplatte entsprechend den Messergebnissen der Sagittalbewegungen des Unterkiefers eines Patienten können zwei voneinander entfernte Kalotten umfassen, deren jede in einer seitlichen Aussparung des Trägers um eine horizontale Achse begrenzt drehbar ist, und die Mittel zum Festlegen der Bewegungsbahnen der Tragplatte entsprechend den Messergebnissen der Lateralbewegungen des Unterkiefers eines Patienten können zwei voneinander entfernte Flachfedern umfassen, deren jede in ihrer Mittellinie an der der Oberwand des Trägers näher liegenden Winkelfläche des Kalottenausschnittes befestigt ist.

Der Erfindungsgegenstand wird nachstehend anhand der Zeichnung beispielsweise näher erläutert.

Es zeigen

Fig. 1 einen Längsschnitt des erfindungsgemässen zahnärztlichen Artikulators entlang der Linie I-I der Fig. 2,

Fig. 2 eine Ansicht des Artikulators nach der Fig. 1 in Richtung des Pfeiles A, ohne Abgussmodelle,

Fig. 3 einen Teilschnitt des Artikulators entlang der Linie III-III der Fig. 2,

Fig. 4 einen Schnitt des Artikulators entlang der Linie IV-IV der Fig. 3,

Fig. 5 eine Draufsicht auf eine teilweise abgebrochene Tragplatte des Artikulators,

Fig. 6 eine gesprengte Ansicht auf Mittel zum Festlegen der Bewegungsbahnen der Tragplatte entsprechend den Messergebnissen der Lateralbewegungen des Unterkiefers eines Patienten,

Fig 7 eine Draufsicht auf die obere Wand eines Trägers des Artikulators, in welcher die Mittel nach der Fig. 6 eingesetzt sind, und

Fig. 8 eine gesprengte Ansicht des Rahmens, des Trägers und der Tragplatte des Artikulators nach der Fig. 1.

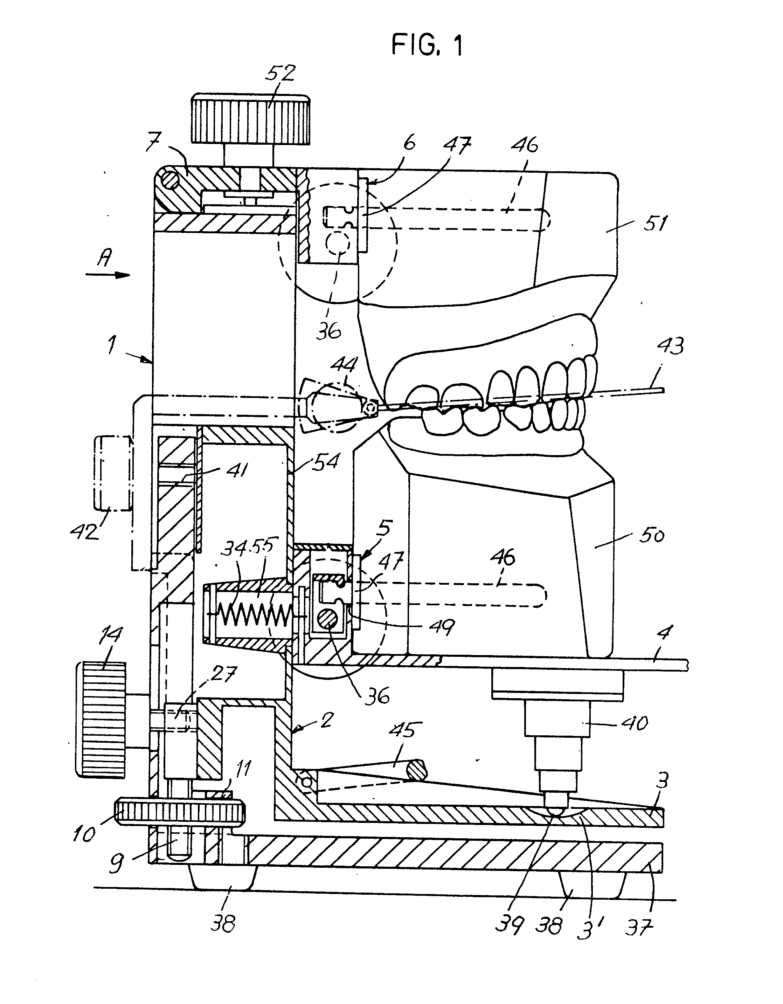

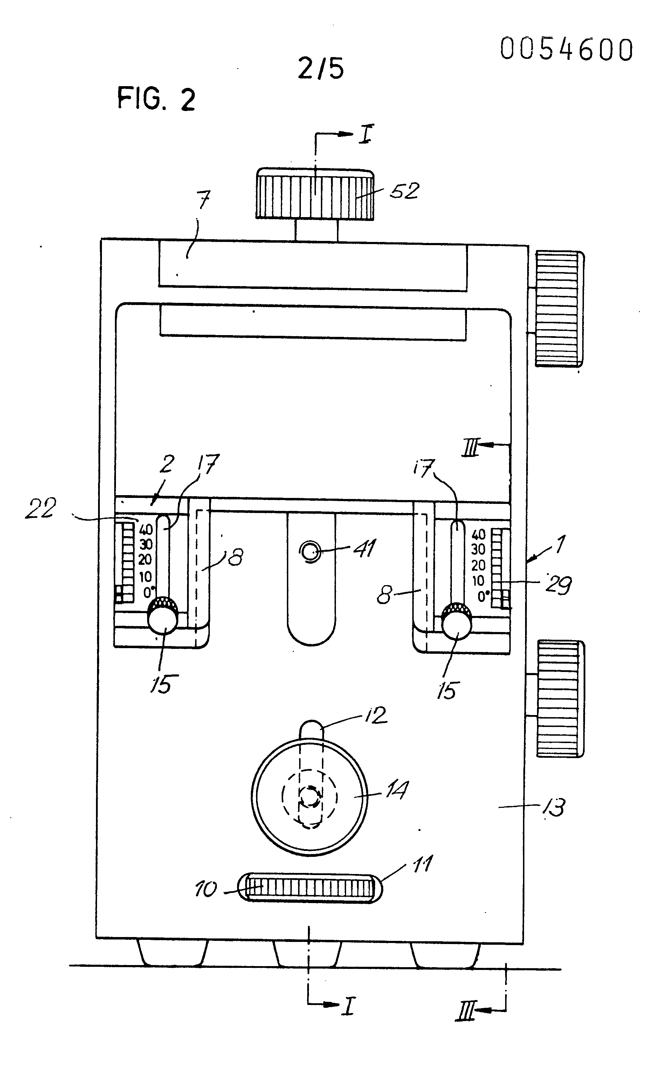

Der Artikulator nach den Fig. 1 und 2 weist einen kastenförmigen Rahmen 1 auf, der in seinem unteren Teil in eine senkrecht zur Ebene des Rahmens 1 verlaufende Stabilisierungsplatte 37 übergeht. Der Rahmen 1 mit der Stabilisierungsplatte 37 ruht an Stützfüssen 38. Am Rahmen 1 ist ein kastenförmiger Träger 2 abnehmbar angeordnet. Senkrecht zur Ebene des Trägers 2 erstreckt sich in seinem unteren Teil eine ortsfeste Stützplatte 3 mit einer halbkugelförmigen Ausnehmung 3', in welcher der Kugelkopf 39 eines Teleskopstützfusses 40 einrastbar ist. Der Teleskopstützfuss 40 ist an der unteren Seite einer beweglichen Tragplatte 4 befestigt, die am Träger 2 abnehmbar angeordnet ist.

Die Tragplatte 4 verläuft im wesentlichen senkrecht zur Ebene des Trägers 2, wie die Stützplatte 3.

Am oberen Ende des Rahmens 1 ist ein Tragarm 7 schwenkbar befestigt, der zur Aufnahme von ein Abgussmodell 51 des oberen Kiefers tragenden Mitteln 6 bestimmt ist. Der Tragarm 7 wird mittels einer Stellschraube 52 mit Knopf am Rahmen 1 in der gewünschten Stellung fixiert.

In der Hinterwand 13 des Rahmens 1 sind übereinander ein horizontaler Schlitz 11, ein vertikaler Schlitz 12 und ein Gewindeloch 41 vorgesehen. Durch eine Klemmschraube 42 mit Knopf, die in das Gewindeloch 41 eingreift, wird eine Schwenkplatte 43 in der gewünschten Höhe eingestellt. Diese Schwenkplatte 43 wird an das Wachsbild des oberen Zahnfleisches eingestellt, wonach auf sie die zum Einsetzen in das Wachsbildmodell bestimmten Zähne aufgelegt werden. In der gewünschten Stellung ist die Schwenkplatte 43 mittels einer Andruckschraube 44 mit Knopf arretierbar.

Beidseitig des Gewindeloches 41 sind in der Hinterwand 13 des Rahmens 1 zwei Führungsnuten 8 vorgesehen, in welchen der Träger 2 geführt wird. Zur Höhenverstellung des Trägers 2 in den Führungsnuten 8 sind im Rahmen 1 Mittel vorgesehen, die einen am unteren Ende des Trägers 2 befestigten, vertikalen Schraubenstift 9 und eine in einem horizontalen Schlitz 11 der Hinterwand 13 des Rahmens 1 untergebrachte flache Mutter 10 umfassen. Die Mutter 10 steht im Eingriff mit dem Schraubenstift 9, so dass durch die Betätigung der Mutter 10 der Träger 2 in der Höhe verstellt werden kann. In der gewünschten Lage wird der Träger 2 mittels einer Feststellschraube 14 mit Knopf arretiert, welche Feststellschraube einen oberhalb des horizontalen Schlitzes 11 vorgesehenen vertikalen Schlitz 12 durchgeht und in ein Gewindeloch 27 im Träger 2 eingreift.

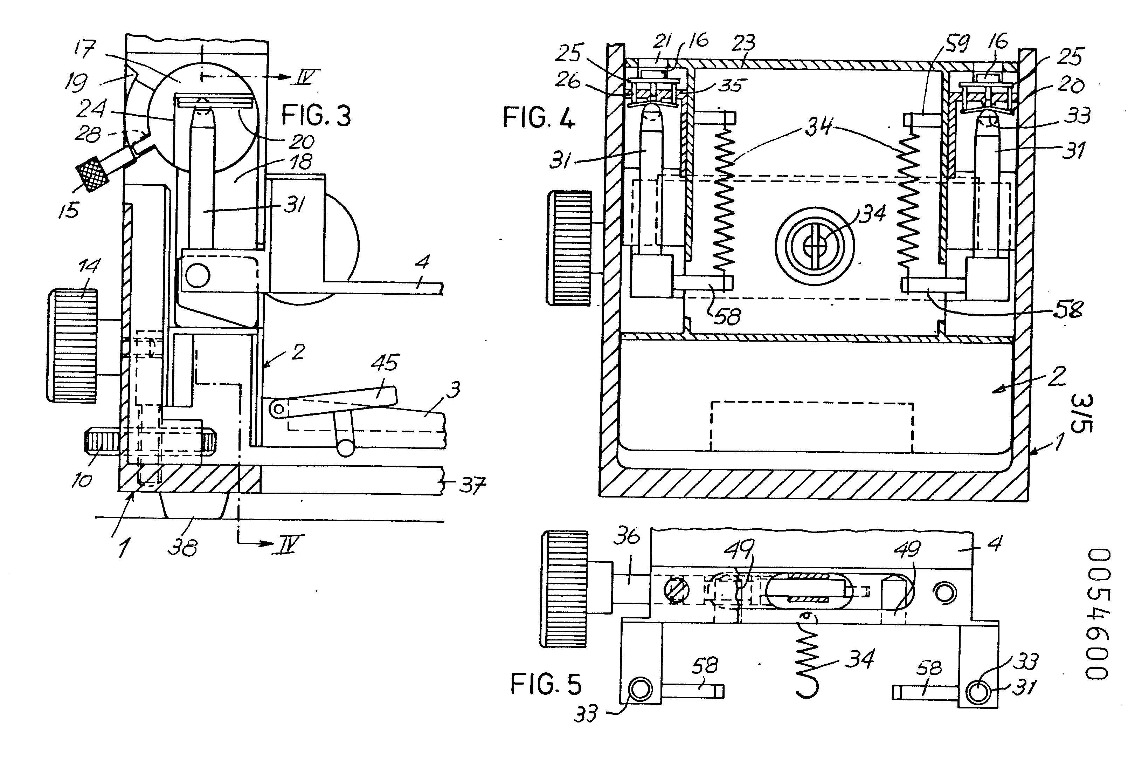

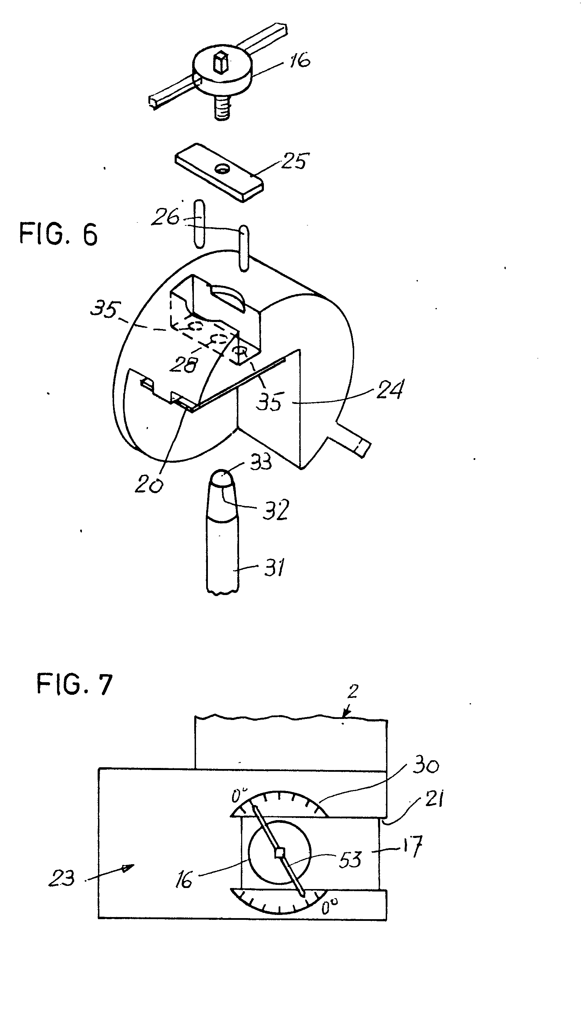

Mittel zum Festlegen der Bewegungsbahnen der Tragplatte 4 entsprechend den Messergebnissen der Sagittalbewegungen des Unterkiefers eines Patienten, welche Messergebnisse z.B. in einem Verfahren und einer Vorrichtung nach dem Schweizer Patentgesuch Nr. 4846/80 registriert wurden, umfassen zwei voneinander entfernte Kalotten 17. Jede dieser Kalotten ist in einer seitlichen Aussparung 18 des Trägers 2 um eine horizontale Achse begrenzt drehbar angeordnet. Die Kalotte 17 ist am besten in den Fig. 3 und 6 sichtbar. Jede Kalotte ist teilweise in einem Winkel von 90° ausgeschnitten und mittels einer in einem bogenförmigen Schlitz 19 in der mit Gradeinteilung 29 versehenen Rückwand 22 des Trägers 2 angeordneten Feststellschraube 15 mit Knopf drehbar. Die Drehbewegungsbahn ist begrenzt auf 40°. In der gewünschten Stellung ist jede Kalotte 17 mittels der Feststellschraube 15 mit Knopf arretierbar. Die Feststellschraube 15 greift in ein Gewindeloch 28 in der abgerundeten Aussenfläche der Kalotte 17 ein.

Mittel zum Festlegen der Bewegungsbahnen der Tragplatte 4 entsprechend den Messergebnissen der Lateralbewegungen des Unterkiefers eines Patienten, die ebenfalls z.B. in einem Verfahren und einer Vorrichtung nach dem Schweizer Patentgesuch Nr. 4846/80 registriert wurden, umfassen zwei voneinander entfernte Flachfedern 20, deren jede in ihrer Mittellinie an der der Oberwand 23 des Trägers 2 näher liegenden Winkelfläche des Kalottenausschnittes 24 befestigt ist. Diese Flachfedern sind aus Federstahl hergestellt. Jede Flachfeder 20 ist mittels einer in einem bogenförmigen Schlitz 21 in der Oberwand 23 des Trägers 2 vorgesehenen Feststellschraube 16 betätigbar. Die den bogenförmigen Schlitz 21 durchgehende Feststellschraube 16 greift in ein Gewindeloch 28 in der Kalotte 17 ein. An der Oberwand 23 des Trägers 2 ist in der Nähe des bogenförmigen Schlitzes 21 eine Gradeinteilung 30 eingetragen.

Durch Einschrauben der Feststellschraube 16 mit Pfeilen in das Gewindeloch 28 wird die Flachfeder 20 über eine in der Kalotte 17 angeordnete Druckplatte 25 und zwei voneinander entfernte Stifte 26, auf welche die Druckplatte 25 drückt, betätigt. Die Stifte 26 sind in gewindefreien Bohrungen 35 in der Kalotte hin- und herbewegbar angeordnet. Sie stützen sich einerseits gegen die Druckplatte 25 und andererseits gegen die beiden freiliegenden Ränder der Flachfeder 20 ab.

Die Tragplatte 4 trägt an ihrer dem Träger 2 zugekehrten Seite zwei voneinander entfernte, senkrecht zur Tragplattenebene verlaufende Führungsstifte 31. Jeder Führungsstift 31 hat an seinem freien Ende eine Ausnehmung 32, in welcher eine Kugel 33 drehbar, jedoch gegen das Herausfallen gesichert, untergebracht ist. Jeder Führungsstift 31 ragt mit der Kugel 33 in den Ausschnitt 24 der entsprechenden Kalotte 17 hinein. Die Tragplatte 4 ist am Träger 2 mittels dreier Zugfedern 34 gelenkig befestigt. Durch diese Massnahme wird es ermöglicht, dass die Tragplatte 4 begrenzt in allen Richtungen von Hand geschwenkt werden kann. Sie kann durch einen abklappbaren, am Träger 2 schwenkbar befestigten Steg 45 in der horizontalen Stellung fixiert werden.

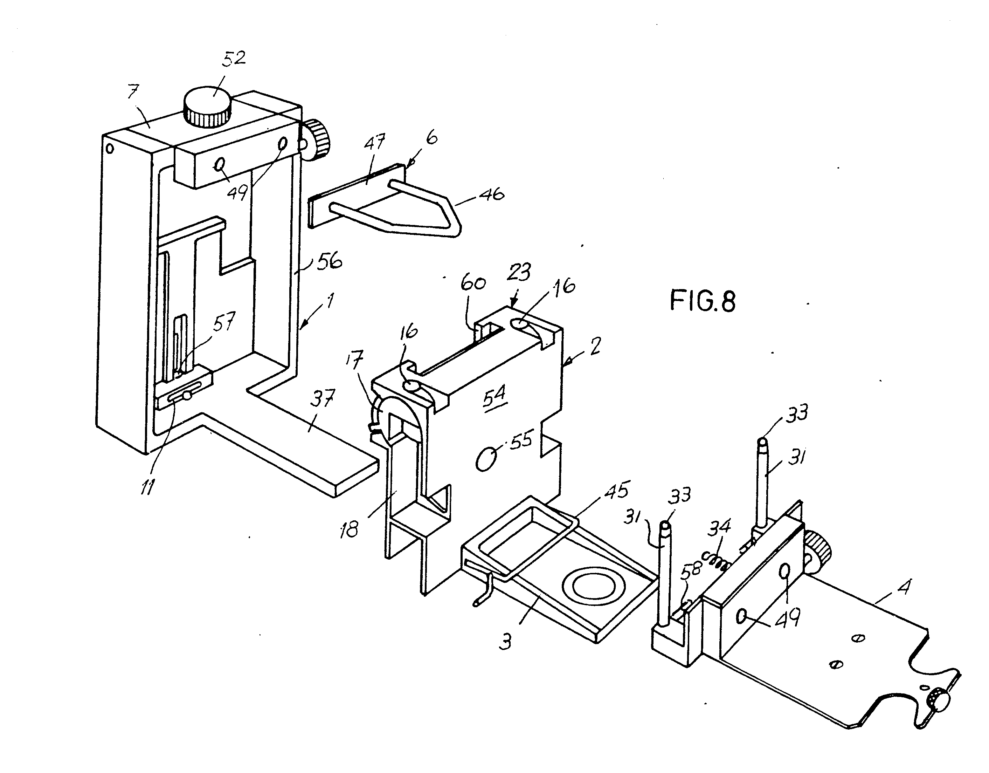

Die das Abgussmodell 50, 51 des unteren und oberen Kiefers tragenden Mittel 5, 6 bestehen jeweils aus einer hubförmigen Gabel 46 und einer Platte 47, durch welche die freien Enden der Gabel 46 durchgeführt sind. Die freien Enden der Gabel 46 weisen gegenüberliegende Einkerbungen auf, mit welchen sie in die Löcher 41 der Tragplatte 4 bzw. des Tragarmes 7 eingeführt und mittels einer Exzenterwelle 36 mit Knopf durch Drehen derselben festgeklemmt werden (siehe Fig. 5 und 8).

In der Fig. 8 sind die einzelnen Teile des Artikulators im auseinandergesetzten Zustand dargestellt. Beim Zusammensetzen der einzelnen Teile wird wie folgt vorgegangen.

Zuerst wird die Tragplatte 4 mit ihrer vorderen Seite in den Träger 2 so eingesetzt, dass in die seitlichen Aussparungen 18 des Trägers 2 die Führungsstifte 31 der Tragplatte 4 und die Zugfeder 34 in die Oeffnung 55 in der Vorderwand 54 des Trägers 2 eingeführt werden. Dabei kommen die Kugeln 33 der Führungsstifte 31 in Berührung mit einer der Winkelflächen der Kalotte 17 und die Zugfeder 34 wird von der anderen Seite des Trägers 2 sichergestellt. Dann wird auf jeden seitlichen Stift 58 der Tragplatte 4 und jeden seitlichen Stift 59 des Trägers 2 jeweils eine weitere Zugfeder 34 aufgesetzt, wodurch die Tragplatte 4 mit dem Träger 2 gelenkig verbunden wird (siehe auch Fig. 4).

Der Träger 2 mit der Tragplatte 4 wird dann in den Rahmen 1 auf solche Weise eingesetzt, dass die einander zugekehrten, vorstehenden Kanten 60 der Rückwand 22 des Trägers 2 in die Führungsnuten 8 des Rahmens 1 eingeführt werden, wobei auch der Schraubenstift 9 am unteren Ende des Trägers 2 in ein Loch 57 im Rahmen 1 eingeführt wird. Durch die Betätigung der in den horizontalen Schlitz 11 vorher eingeführten flachen Mutter 10, die mit dem Schraubensift 9 in Eingriff steht, wird der Träger 2 mit der Tragplatte 4 höhenverstellt. Im eingesetzten Zustand ist die Vorderwand 54 des Trägers 2 mit den Vorderkanten 56 des Rahmens bündig (siehe auch Fig. 1).

Schlussendlich werden in die Löcher 49 der Tragplatte 4 sowie des Tragarms 7 die die Abgussmodelle 50, 51 des unteren bzw. des oberen Kiefers tragenden Mittel 5, 6 eingesetzt und mittels Exzenterwellen 36 mit Knöpfen festgeklemmt (siehe auch Fig. 1).

Die früher festgestellten Messergebnisse von Sagittal- und Lateralbewegungen des unteren Kiefers eines Patienten gegenüber dem oberen Kiefer werden in den oben beschriebenen Mitteln 17, 15 und 20, 16

0054600

des Artikulators hineingestellt und fixiert. Dadurch wird die von Hand betätigte Tragplatte 4 mit dem Abgussmodell 50 des unteren Kiefers diejenigen Bewegungen ausführen, die dem Funktionsablauf des Kiefergelenksystems eines Patienten genau entsprechen. Auf diese Weise wird eine Einschleifung der Prothese bzw. der Zähne usw. vorgenommen, so dass die Prothese bzw. Zähne usw. - wenn in den Mund des Patienten eingesetzt - bei den Bewegungen des unteren Kiefers gegenüber dem oberen Kiefer überhaupt nicht stören. Somit wird eine Okklusionsfläche geschaffen, die für den Patienten von grösstem Vorteil ist.

0054600

PATENTANSPRUECHE

1. Zahnärztlicher Artikulator, mit einem Rahmen (1), einem am Rahmen (1) abnehmbar angeordneten Träger (2) mit einer senkrecht zur Ebene des Trägers (2) verlaufenden ortsfesten Stützplatte (3) und einer beweglichen Tragplatte (4) mit einem Teleskopstützfuss (40), welche Tragplatte (4) am Träger (2) abnehmbar befestigt ist und im wesentlichen ebenfalls senkrecht zur Ebene des Trägers (2) verläuft, und einem am oberen Ende des Rahmens (1) schwenkbar befestigten Tragarm (7) zur Aufnahme von ein Abgussmodell (51) des oberen Kiefers tragenden Mitteln (6), gekennzeichnet durch Mittel zur Höhenverstellung des Trägers (2), der in Führungsnuten (8) der Hinterwand (13) des Rahmens (1) führbar ist, sowie Mittel zum Festlegen der Bewegungsbahnen der Tragplatte (4) entsprechend den Messergebnissen der Sagittal- und Lateralbewegungen des Unterkiefers eines Patienten.

2. Artikulator nach Patentanspruch 1, dadurch gekennzeichnet, dass die Mittel zur Höhenverstellung des in Führungsnuten (8) des Rahmens (1) führbaren Trägers (2) einen am unteren Ende des Trägers (2) befestigten, vertikalen Schraubenstift (9) und eine in einem horizontalen Schlitz (11) der Hinterwand (13) des Rahmens (1) untergebrachte Mutter (10) umfassen, welche mit dem Schraubenstift (9) in Eingriff steht.

3. Artikulator nach den Patentansprüchen 1 und 2, dadurch gekennzeichnet, dass in der Hinterwand (13) des Rahmens (1) oberhalb des horizontalen Schlitzes (11) ein vertikaler Schlitz (12) vorgesehen ist, in welchem eine in ein Gewindeloch (27) im Träger (2) hineingreifende erste Feststellschraube (14) mit Knopf zur Arretierung des Trägers (2) in der gewünschten Stellung vorgesehen ist.

4. Artikulator nach Patentanspruch 1, dadurch gekennzeichnet, dass die Mittel zum Festlegen der Bewegungsbahnen der Tragplatte (4) entsprechend den Messergebnissen der Sagittalbewegungen des Unterkiefers eines Patienten zwei voneinander entfernte Kalotten (17) umfassen, deren jede in einer seitlichen Aussparung (18) des Trägers (2) um eine horizontale Achse begrenzt drehbar ist.

5. Artikulator nach Patentanspruch 4, dadurch gekennzeichnet, dass jede Kalotte (17) teilweise in einem Winkel von 90° ausgeschnitten und mittels einer in einem bogenförmigen Schlitz (19) in der mit Gradeinteilung (29) versehenen Rückwand (22) des Trägers (2) vorgesehenen zweiten Feststellschraube (15) mit Knopf, die in ein Gewindeloch (28) in der Kalotte eingreift, im Bereich von 0° bis 40° drehbar und in der gewünschten Stellung arretierbar ist.

6. Artikulator nach Patentanspruch 1, dadurch gekennzeichnet, dass die Mittel zum Festlegen der Bewegungsbahnen der Tragplatte (4) entsprechend den Messergebnissen der Lateralbewegungen des Unterkiefers eines Patienten zwei voneinander entfernte Flachfedern (20) umfassen, deren jede in ihrer Mittellinie an der der Oberwand (23) des Trägers (2) näherliegenden Winkelfläche des Kalottenausschnittes (24) befestigt ist.

7. Artikulator nach Patentanspruch 6, dadurch gekennzeichnet, dass jede Flachfeder (20) mittels einer in einem bogenförmigen Schlitz (21) in der mit Gradeinteilung (30) versehenen Oberwand (23) des Trägers (2) vorgesehenen dritten Feststellschraube (16), die in ein Gewindeloch (28) in der Kalotte (17) eingreift, betätigbar ist.

8. Artikulator nach Patentanspruch 7, dadurch gekennzeichnet, dass jede Flachfeder (20) mittels der Feststellschraube (16) über eine Druckplatte (25) und zwei voneinander entfernte Stifte (26) betätigbar ist, welche Stifte in gewindefreien Bohrungen (35) in der Kalotte hin- und herbewegbar angeordnet sind, wobei sie sich einerseits gegen die Druckplatte (25) und andererseits gegen die beiden freiliegenden Ränder der Flachfedern (20) abstützen.

9. Artikulator nach Patentanspruch 1, dadurch gekennzeichnet, dass auf der dem Träger (2) zugekehrten Seite der Tragplatte (4) zwei voneinander entfernte, senkrecht zur Tragplattenebene verlaufende Führungsstifte (31) vorgesehen sind, deren jeder an seinem freien Ende eine Ausnehmung (32) aufweist, in welcher eine Kugel (33) drehbar untergebracht ist, die in den Ausschnitt (24) der entsprechenden Kalotte (17) hineinragt, und dass die Tragplatte (4) am Träger (2) mittels dreier Zugfedern (34) gelenkig befestigt ist.

10. Artikulator nach Patentanspruch 1, dadurch gekennzeichnet, dass die das Abgussmodell (50) des unteren Kiefers sowie das Abgussmodell (51) des oberen Kiefers tragenden Mittel (5, 6) in der Tragplatte (4) bzw. im Tragarm (7) jeweils mittels einer exzentrischen Welle (36) festgeklemmt sind.

FIG. 1

0054600

1/5

FIG. 2

2/5

0054600

FIG. 3

17
19
24
28
15

IV
IV

FIG. 3

20
18
31

4

14

2

45

3

10
1
38

IV
IV
37

FIG. 4

25
26

21 16 23

35

59 16

25
20
33

31

34

31

34

31

58

58

2

1

FIG. 5

36

49

49

4

58

34

58

33

33

31

3/5

0054600

FIG. 6

FIG. 7

FIG.8

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US – A – 4 189 837 (STELE) <br> * Spalte 3, Zeile 54 bis Spalte 4, Zeile 43 * <br> –– | 1,4 | A 61 C 11/00 |
| | DE – A – 2 231 858 (BALOGH) <br> * Fig. 1, 2, 5 * <br> –– | 1 | |
| | US – A – 2 797 483 (LISOWSKI) <br> * Spalte 2, Zeilen 24 bis 43 * <br> –– | 4,5 | RECHERCHIERTE SACHGEBIETE (Int. Cl.³) |
| | DE – B – 1 224 443 (DIETRICH) <br> * Fig. 2 bis 4 * <br> –– | 10 | A 61 C 11/00 |
| D | US – A – 2 716 815 (FORD) <br> –– | | |
| D | US – A – 2 621 406 (McPHEE) <br> –– | | |
| A | DE – B2 – 1 964 157 (BERGHAUS) <br> –– | | |
| A | DE – B2 – 1 964 137 (BERGHAUS) <br> –– | | |
| A | FR – A1 – 2 431 855 (GERBELOT-BARRILLON) <br> –– | | |
| A | US – A – 4 083 114 (ACEVEDO) <br> –– | | |
| A | US – A – 2 270 561 (SANBORN) <br> –– | | |
| A | US – A – 1 815 956 (RALPH) <br> –––– | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-08-1981 | SIMON |

EPA form 1503.1 06.78